# EUROPEAN PATENT APPLICATION

(11) **EP 1 421 839 A1**
(43) Date of publication of application: **26.05.2004**
(21) Application number: 02090387.8
(22) Date of filing: 20.11.2002
(51) Int. Cl.: A01C 1/04, A01G 1/00

(54) **Geotextile mat based soilless sod**

(30) Priority: 20.11.2002 US 331649 P
(71) Applicant: Elmaliach, Daniel, Pardes-Hanna Karkur 37076 (IL)
(72) Inventor: Elmaliach, Daniel, Pardes-Hanna Karkur 37076 (IL)
(74) Representative: Ziebig, Marlene K., Dr.

(57) **Abstract**

A soilless sod and a method of producing same are disclosed. The method comprises providing a growth mat with cotton and viscose fibers, providing grass seeds or grass sprigs to the growth mat, providing grass sprigs onto the growth mat, and providing a cover mat on top of the upper side of the growth mat. The soilless sod comprises a geo-textile mat being a growth mat, growing material consisting of any combination of grass seeds and grass sprigs, and a cover mat that is in touch with the upper side of the growth mat. The cover mat may be affixed to the growth mat by any of stitch bonding or punch needling or sewing or bonding.

## Description

### CROSS-REFERENCE TO RELATED APPLICATIONS

This application claims the benefit of provisional patent application serial number 60/331,649 entitled "GEOTEXTILE MAT BASED SOILESS SOD" and filed November 20, 2001.

### TECHNICAL FIELD

The present invention relates to sod growing techniques in general, and more particularly to soilless sod growing techniques, and soilless sod products.

### BACKGROUND

In the last few decades the primary technique of sod production, destined for athletic fields and public or private lawns, has been growing sod on natural soil. This technique is used mainly for the production and marketing of warm and cool season turf varieties, but also for ornamental grasses, plants for erosion control, wild flowers, etc.

Specific machinery has been developed for the production, harvest and marketing of sods: a sod harvester of slabs and/or rolls, equipment for sod installation, mowers and so on.

Growing sod on natural soil creates a complex agricultural problem with regard to weed control. The main known means of tackling this problem is the use of methyl bromide, which is expected to be prohibited in western countries with in a decade. So far no other equally effective alternative for soil fumigation against weeds, soil-born diseases, insects or nematodes has been discovered.

In the last thirty years continuous efforts have been made to improve on the technique of growing soilless sod in order to obtain a high-quality light-weight sod. Simultaneously, this technique has helped to solve various problems resulting from growing sod on natural soil, problems such as weed control, turf purity, etc.

### DETAILED DESCRIPTION OF THE INVENTION

An innovative and low-cost soilless sod and soilless growing mats, and method of producing same are disclosed. According to some embodiments of the present invention an organic geo-textile mat is used as a growth substrate. Said mat may be made of 100% biodegradable materials (such as cotton, viscose) or may be combined with non-degradable synthetic materials (such as polyester, polypropylene and others), or may be made of 100% synthetic materials. The use of the specific materials and a selection of the proportions of each material of the mat may influence some or all of the features of the mat, thus allowing a specific selection to best fit a specific need. When the mat comprises cotton and viscose only, a relatively very light yet a very mechanically-strong mat is received. The specific weight of an organic mat according to some embodiments of the present invention may be in the range of 50 - 250 gram/m². Despite being so light this mat is characterized also by high water absorbency (up to 5 liter/m² in a horizontally-placed mat and up to 3.5 liter/m² in a mat placed on inclined surface), thus making redundant the use of any further water retention components. Despite being so light, this mat is characterized also by high mechanical strength which allows it to be mechanically treated (being rolled off the ground, shipped over to another location, etc.) even when highly soaked with water, without any damage to the mat. Mat thickness according to some embodiments of the present invention may be as low as about 5 mm, thus allowing lower space in shipping and stowing.

These qualities enable soilless sod produced according to some embodiments of the present invention to have requirements imposed by any stage of production or marketing system to be fully met - rolling, covering steep slopes, planting, harvest at any stage of maturity of the sod, shipping and installation of the sods.

A mat according to some embodiments of the present invention may be the sole growth substrate (henceforth the growth mat), requiring no soil amendments such as water absorbents, or additional substrate such as peat, compost, wood chips etc.

Propagation material (such as sprigs or seeds) may be broadcast over the growth mat by a sprigs-planter or a seeder or any other known suitable means. Alternatively, the growth mat may contain seeds pre-embedded in it during the production of the growth mat. According to some embodiments of the present invention seeds may be embedded in the growth mat in any desired depth of the mat and in any desired specific amount of seeds per area unit of the growth mat. Moreover, embedding of grass seeds in the growth mat according to some embodiments of the present invention may be carried out without any interference in the production process, thus making the addition of the embedding stage to existing mat production machinery very easy and very inexpensive. These features also allow to carry out the grass seeds embedding stage in the facilities of any growth mat manufacturer.

The propagation material according to some embodiments of the present invention may be covered by another layer of geotextile mat, which may be made of other types of materials (e.g. cotton, viscose, polyester, etc.). This mat (henceforth the cover mat), thinner and lighter than the growth mat, may have a specific weight of about 50 gram/m² to 18 gram/m². When soggy, this mat fastens strongly sprigs or the seeds provided to the growth mat, thus keeping them moist and substantially unmovable. Both with grass seeds or grass sprigs the cover mat enables the sprigs or the seed-sprouts to penetrate through it until the cover mat is completely absorbed by the growing grass. According to some embodiments of the present invention watering of the sod may be done in intervals from 2-3 times per hour and down to once every several hours. Watering frequency and amount may be determined by the type of propagation material, the climate and sod age. A slow release fertilizer may be scattered to the growth mat and a liquid fertilizer also be used through the irrigation system. Duration of the growth process depends on climatic conditions and type of propagation material. It may vary from several weeks to several months.

Soilless sod according to some embodiments of the present invention carries distinct economical and technological advantages compared with soilless sod solutions of the present art. Growth of sods taking place directly on the growth mat obviates use of another medium such as peat, compost, wood chips etc. This reduces production costs, simplifies the production process, dispenses with high-cost machinery and renders the sod much lighter. Sprigs-planter loaded with solid mature sod may be used for broadcasting vegetative material in one step, which renders the system feasible and commercially profitable. By using the whole sod as a source of the growth material, a superior growth material is achieved, which is less sensitive to a lack of water and capable to begin rooting earlier than with other types of grass sources. Currently available materials and technologies for growth mat production may easily be exploited. Ratios among the components of the mat in accordance with the desired functionality of the sod (sport fields or erosion control, for example) may easily be determined. Recycled materials may be used for mat manufacture. Use of different types of water retention components is made redundant because of the growth mat's high water absorbency.

According to some embodiments of the present invention the growth mat is extremely thin, about 5 mm, which reduces shipping volume considerably without degrading other desired features, such as water and air retention.

The specific weight of the growth mat is extremely low and may vary from 100 to 250 gram/m², thus reducing production costs. In certain cases a mat weighing 50 gram/m² will suffice, thus saving further on production costs and saving on shipping weight as well.

Several additional beneficial features of a growth mat according to the present invention are made available. The growth mat may be made heavier in case such a mat is needed and economically justified, without making changes in the production technology described above. Sod grown on such heavier growth mat may be very useful for rental, special sports events, etc. or special engineering purposes such as soil stabilization. The growth mat may also be of such mechanical strength that it enables harvest and installation of sods by mechanical means, even at time when the sods are not fully mature, or on steep slopes. Furthermore, both the components of the growth mat and its self-weight when soggy, allow its fastening to a base area such as a plastic sheet or the like, and prevent it from blowing away in windy conditions. The use of a very light cover mat (about 18-50 gram/m²) with high water absorbency (thus adding to its weight and further fastening the plant material to the growth mat) may also prevent any seeds or vegetative material from blowing away in windy conditions and keeps it moist. Both the weight of the upper mat when soggy and the tendency of the growth mat to be well fastened render practical the sod's growth process under windy field conditions.

Additional benefit of soilless sod made according to some embodiment of the present invention is the ability to produce a mat containing seeds without introducing any changes in the normal process of mat manufacture. Accordingly, seeds may be put unto the growth mat during the production of the growth mat, and without interfering with the production process. Moreover, the ability to determine seed location within the mat (i.e. its position along the vertical dimension of the growth mat, i.e. its depth in the mat), the seed quantity per surface unit and the uniformly seed broadcasting without intervening in the normal process of mat manufacture, make the production of soilless sod according to the present invention very easy to install on existing machinery and very inexpensive.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A method of producing a soilless sod, comprising:
providing a geo-textile growth mat comprising cotton and viscose fibers, and
providing grass seeds to said growth mat in any desired depth in said growth mat.

2. A method of producing a soilless sod, comprising:
providing a growth mat comprising cotton and viscose fibers;
providing grass seeds to said growth mat in any desired depth in said growth mat;
providing grass sprigs onto said growth mat, and
providing a cover mat on top of the upper side of said growth mat.

3. The method of claim 2, further comprising:
affixing said cover mat to said growth mat.

4. The method of claim 2, wherein said affixing step is done by one of stitch bonding or punch needling or sewing or bonding.

5. The method of claim 2, wherein said cover mat strongly attaches to said growth mat when being watered, so as to virtually bond said cover mat to said growth mat.

6. The method of claim 2 wherein the steps of providing a growth mat and providing grass seeds take place in a first location and the steps of providing grass sprigs and providing a cover mat and affixing said cover mat to said growth mat take place in a second location.

7. A method of producing a soilless sod, comprising:
providing a growth mat comprising cotton and viscose fibers;
providing grass sprigs onto said growth mat, and
providing a cover mat on top of the upper side of said growth mat.

8. The method of claim 7 further comprising affixing said cover mat to said growth mat.

9. The method of claim 7 wherein said affixing step is done by one of stitch bonding or punch needling or sewing or bonding.

10. The method of claim 7 wherein the steps of providing a growth mat and providing grass sprigs take place in a first location and the step of providing a cover mat takes place in a second location.

11. A soilless sod comprising:
a geo-textile mat being a growth mat, said growth mat comprising cotton and viscose fibers, and
grass seeds,
wherein said grass seeds are provided into said growth mat in any desired depth in said growth mat.

12. The soilless sod of claim 11 wherein the specific weight of said growth mat is in the range of 50 - 250 gram/m².

13. A soilless sod comprising:
a geo-textile mat being a growth mat, said growth mat comprising cotton and viscose fibers;
growing material consisting of any combination of grass seeds and grass sprigs, and
a cover mat, said cover mat is in touch with the upper side of said growth mat,
wherein said cover mat strongly attaches to said growth mat when being watered so as to virtually bond said cover mat to said growth mat.

14. The soilless sod of claim 13 wherein said geo-textile mat is one of non-woven or woven-non-woven mat.

15. The soilless sod of claim 13 wherein said cover mat is affixed to said growth mat by means of one or more of punch needling or stitch-bonding or sewing or bonding.

16. The soilless sod of claim 13 wherein said grass seeds are being provided at any desired depth in said growth mat.

17. The soilless sod of claim 13 wherein the specific weight of said growth mat is in the range of 50 - 250 gram/m².

18. The soilless sod of claim 13 wherein the specific weight of said cover mat is in the range of 18 - 50 gram/m².

19. A soilless sod comprising:
a geo-textile mat being a growth mat, said growth mat comprising cotton and viscose fibers;
grass sprigs provided into said growth mat, and
a cover mat, said cover mat is in touch with the upper side of said growth mat.

20. A soilless sod comprising:
a geo-textile mat being a growth mat, said growth mat comprising cotton and viscose fibers;
grass sprigs provided onto said growth mat, and
a cover mat, said cover mat is in touch with the upper side of said growth mat.

21. The soilless sod of claim 20 wherein said cover mat is affixed to said growth mat by means of one or more of punch needling or stitch-bonding or sewing or bonding.

22. The soilless sod of claim 20 wherein the specific weight of said growth mat is in the range of 50 - 250 gram/m².

23. The soilless sod of claim 20 wherein the specific weight of said cover mat is in the range of 18 - 50 gram/m².
